Europäisches Patentamt

European Patent Office

Office européen des brevets

(19)

(11) Veröffentlichungsnummer: **0 170 325 B1**

(12) **EUROPÄISCHE PATENTSCHRIFT**

(45) Veröffentlichungstag der Patentschrift: **17.04.91**

(51) Int. Cl.⁵: **H04N 5/18**

(21) Anmeldenummer: **85201177.4**

(22) Anmeldetag: **12.07.85**

(54) Schaltungsanordnung zur Erzeugung von Klemmimpulsen.

(30) Priorität: **01.08.84 DE 3428301**

(43) Veröffentlichungstag der Anmeldung:
**05.02.86 Patentblatt 86/06**

(45) Bekanntmachung des Hinweises auf die
Patenterteilung:
**17.04.91 Patentblatt 91/16**

(84) Benannte Vertragsstaaten:
**DE FR GB**

(56) Entgegenhaltungen:
**DD-A- 76 700**
**DE-A- 2 258 039**
**DE-A- 3 304 245**

(73) Patentinhaber: **Philips Patentverwaltung
GmbH
Wendenstrasse 35 Postfach 10 51 49
W-2000 Hamburg 1(DE)DE**

Patentinhaber: **N.V. Philips' Gloeilampenfabrieken
Groenewoudseweg 1
NL-5621 BA Eindhoven(NL)FR GB**

(72) Erfinder: **Bährle, Peter, Dipl.-Ing. (FH)
Ludwigstrasse 43
W-8500 Nürnberg(DE)**
Erfinder: **Lange, Heinz, Dipl.-Ing.
Bienenweg 13
W-8501 Heroldsberg(DE)**

(74) Vertreter: **Peuckert, Hermann, Dipl.-Ing. et al
Philips Patentverwaltung GmbH Wendenstrasse 35 Postfach 10 51 49
W-2000 Hamburg 1(DE)**

**Beschreibung**

Die Erfindung betrifft eine Schaltungsanordnung zur Erzeugung von Klemmimpulsen für eine Klemmschaltung zur Wiedergewinnung der mittleren Bildhelligkeit eines Videosignals.

Klemmschaltungen werden verwendet, um einem Wechselspannungssignal eine Gleichspannung zu überlagern. Bei Videosignalen stellt der Gleichspannungsanteil die jeweilige mittlere Bildhelligkeit dar. Klemmschaltungen zur Wiedergewinnung der mittleren Bildhelligkeit sind seit langem bekannt und je nach Anwendungsfall verschieden zu dimensionieren. In einem Fernsehempfänger erfüllt z.B. eine einfache Niveaudiodenschaltung, die den Schwarzwert konstant hält, alle Anforderungen.

Bei der Anwendung am Anfang eines Fernseh-Übertragungssystems sind die Anforderungen an eine derartige Klemmschaltung wesentlich höher, damit die Aussteuerfähigkeit des Übertragungssystems möglichst gut ausgenutzt werden kann. Dies kann bei analogen Leitungsverstärkern die Aussteuergrenze, bei digitaler Übertragung die Kennlinie des A/D-Wandlers sein. Außerdem muß die Klemmschaltung Einschwingvorgänge vorgeschalteter Übertragungssy steme und überlagerte tieffrequente Störspannungen beseitigen können.

Aus der DE-PS 1 809 362 ist eine Schaltungsanordnung bekannt, die diesen Anforderungen genügt. Diese Schaltungsanordnung arbeitet nach dem Prinzip der getasteten Klemmschaltung und hält das Signal auf dem Synchronimpulsboden fest.

Sobald über eine derartige Schaltungsanordnung jedoch Videosignale mit integriertem Ton nach dem Sound-in-Sync-(SIS)-Verfahren übertragen werden sollen, entstehen erhebliche Bildstörungen.

Mit einer in DE-OS 28 11 221 beschriebenen Schaltungsanordnung können diese Störungen auf ein nicht mehr sichtbares Maß reduziert werden. Prinzipiell sind sie jedoch immer noch vorhanden und das Einhalten eines genügend guten Störabstandes erfordert viel Prüf- und Abgleichaufwand.

Es ist bekannt, das Videosignal horizontalfrequent auf die hintere Schwarzschulter der horizontalen Austastlücke zu klemmen und hierfür eine getastete Klemmschaltung zu benutzen. Eine solche getastete Klemmschaltung kann aus einem Schalter und einem Klemmkondensator aufgebaut sein. Durch die Impulse eines Klemmimpulssignales wird der Schalter jeweils in den leitenden Zustand geschaltet und der Kondensator hierdurch auf die Klemmspannung aufgeladen. Die Klemmimpulse können von der Vorder- bzw. der Hinterflanke der horizontalen Synchronimpulse abgeleitet werden. Die Ableitung der Klemmimpulse von der Vorderflanke hat aber den Nachteil, daß die Flanken eines im Synchronimpuls übertragenen Sound-in-Sync-Signals während der Synchronimpulszeit erneut Klemmimpulse auslösen, die erst im Bildbereich wirksam werden und damit starke Störungen verursachen. Außerdem lassen sich mit derartigen Schaltungen Fehler in der vertikalen Austastlücke (V-Lücke) nie ganz vermeiden, da die Länge des Synchronbodenniveaus bei den Synchronimpulsen und während der V-Lücke stark unterschiedlich ist.

Eine Abhilfe wäre die Abschaltung der Klemmung während der V-Lücke, wie aus der DE-PS 21 62 955 bekannt. Werden auf eine Schaltung, wie sie darin beschrieben ist, Signale mit überlagerten tieffrequenten Störspannungen gegeben, so entstehen in der V-Lücke Dachschrägen entsprechend der überlagerten Störung, die in das Signal einmoduliert werden. Eine zusätzliche Erschwernis für die Dimensionierung einer optimalen Klemmschaltung bringt das integrierte Ton im Bild-Verfahren TV-PCM2, welches mit einem verkürzten Synchronimpuls arbeitet und bei dem vor und nach dem Burst die Toninformation in Form von PCM-Impulsen enthalten ist. Wegen dieses Verfahrens ist auch die Ableitung der Klemmimpulse von der Rückflanke der Synchronimpulse nicht mehr anwendbar, was erhebliche Vorteile im Hinblick auf die V-Lücke geboten hätte.

Der Erfindung liegt die Aufgabe zugrunde, für eine Klemmschaltung zur Wiedergewinnung der mittleren Bildhelligkeit eines Videosignals eine Schaltungsanordnung zur Erzeugung von Klemmimpulsen anzugeben, die unabhängig von der Norm (PAL, SECAM oder NTSC) des jeweils übertragenen Videosignals zuver lässig und störungsfrei arbeitet und unabhängig davon, ob ein zusätzliches Tonsignal nach einem der beiden Verfahren Sound-in-Sync oder TV-PCM2 mit übertragen wird.

Die Aufgabe wird gemäß der Erfindung dadurch gelöst, daß mittels Monoflops aus den Videosignalimpulsen zeilenfrequente Taktimpulse erzeugt werden und mittels einer von den Monoflops angesteuerten ersten Zählschaltung die vertikale Austastlücke erkannt wird und diese erste Zählschaltung jeweils einen der Ausgänge einer zweiten Zählschaltung anwählt, an denen zu unterschiedlichen Zeiten Klemmimpulsignale abgegeben werden.

Im folgenden sollen die Erfindung und ihre Ausgestaltungen anhand einer in den Figuren 1 bis 4 dargestellten Ausführungsbeispiels näher beschrieben werden.

Es zeigen:

Fig. 1          ein Blockschaltbild einer Schaltungsanordnung zur Wiedergewinnung der mittleren Bildhelligkeit

Fig. 2 bis 4    Zeitdiagramme für die Ableitung der Synchronimpulse und der Klemmimpulse

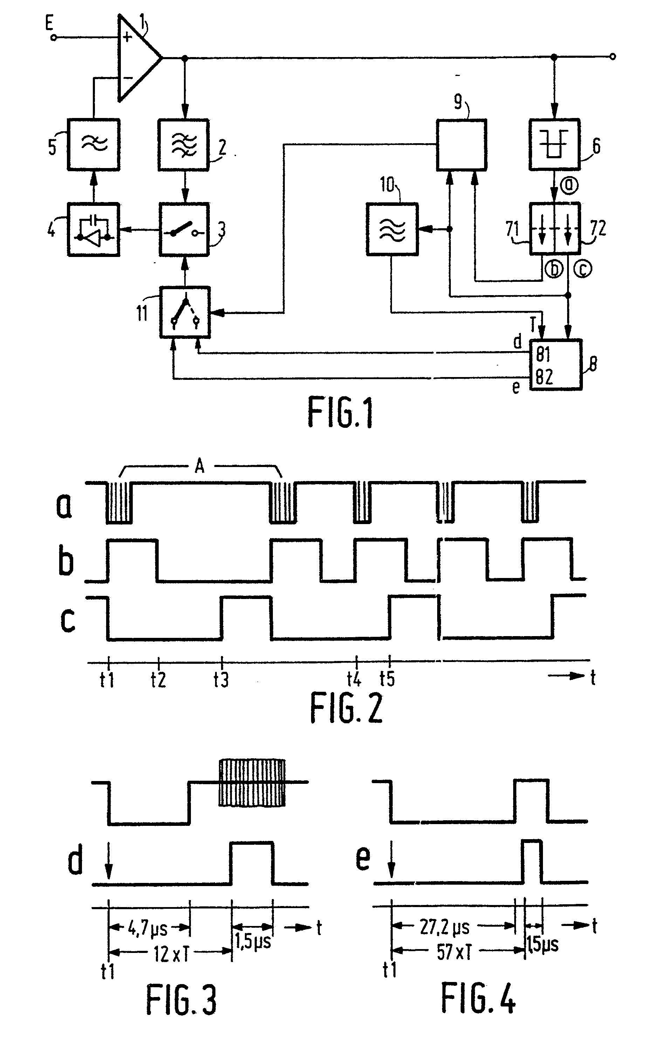

In Fig. 1 gelangt das Videosignal von einem Eingang E der Schaltungsanordnung zu einem Verstärker 1, der einen zweiten Eingang zur Zuführung einer Klemmspannung besitzt. Über eine Farbträgerbandsperre 2 wird das geklemmte Signal einer Abtast-und Halteschaltung 3 zugeführt, an deren zweiten Eingang die Klemmimpulse anliegen. Das Ausgangssignal der Abtast- und Halteschaltung 3 wird einem Integrator 4 zugeführt, in dem daraus die Kompensationsspannung für die Klemmung gewonnen wird. Ein zwischen dem Integrator 4 und dem zweiten Eingang des Verstärkers 1 eingeschaltetes Tiefpaßfilter 5 verhindert, daß Taktreste des Oszillators in den Videosignalweg gelangen.

Das Videosignal gelangt vom Ausgang des Verstärkers 1 außerdem zu einer Abschneidestufe 6, mittels der die Synchronimpulse vom Videosignal abgetrennt werden. Die Ausgangsimpulse der Abschneidestufe 6, im Diagramm in Fig. 2 in Zeile a dargestellt, werden zwei nicht retriggerbaren Monoflops 71 und 72 zugeführt, die beide in einem IC vereinigt sein können. Durch die mit A bezeichneten Striche sind SIS-Impulse angedeutet.

Die beiden Monoflops 71 und 72 haben unterschiedliche Zeitkonstanten. Das erste Monoflop 71 hat eine Zeitkonstante, die größer ist als die Dauer eines Synchronimpulses und kleiner als eine halbe Zeilendauer, während die Zeitkonstante des zweiten Monoflops 72 größer ist als die halbe Zeilendauer und kleiner als die ganze Zeilendauer. Das Ausgangssignal des Monoflops 71 ist in Fig. 2 in Zeile b gezeigt, das Ausgangssignal des Monoflops 72 in Zeile c.

Beide Monoflops 71 und 72 werden zu Beginn der horizontalen Austastlücke (Zeit t1 in Fig. 2) durch die Vorderflanke eines Synchronimpulses gesetzt. Das erste Monoflop 71 ist bis zum Ablauf der halben Zeilendauer wieder in seinen Ausgangs zustand zurückgefallen (t2), das zweite Monoflop 72 noch nicht. Dieses fällt erst kurz vor dem Ablauf der Zeilendauer wieder in seinen Ausgangszustand zurück (t3).Die beim Sound-in-Sync-Verfahren zur Übertragung der Toninformation benutzten SIS-Impulse (A) sind in den Synchronimpuls eingefügt. Ihre Vorderflanken können die beiden Monoflops 71 und 72 nicht beeinflussen, da beide mit der Vorderflanke des Synchronimpulses gesetzt worden sind und durch die Vorderflanke etwa nachfolgender Impulse nicht mehr erneut gestartet werden können, solange sie vorher nicht in den Ausgangszustand zurückgefallen sind. SIS-Impulse (A) treten nicht mehr auf, wenn das erste Monoflop 71 wieder in den Ausgangszustand zurückgefallen ist, da seine Zeitkonstante größer ist als die Dauer des Synchronimpulses.

Die Impulse am Ausgang des Monoflops 72 erscheinen zeilenfrequent und zwar auch während der V-Lücke, da das Monoflop 72 während dieser Zeit immer durch die Vorderflanke jedes zweiten Ausgleichstrabanten und Bildwechselimpulses neu gestartet wird.

Der Ausgang des Monoflops 72 ist mit dem Synchronisiereingang eines Taktgenerators 10 verbunden, der hierdurch auf die Zeilenfrequenz synchronisiert wird. Die Taktfrequenz des Taktgenerators ist im Ausführungsbeispiel zu fT = 2 MHz gewählt, einem ganzzahligen Vielfachen der Zeilenfrequenz von 15.625 Hz beim PAL-System. Wird die Schaltung für Systeme mit anderer Norm eingesetzt, die mit anderer Zeilenfrequenz arbeiten, so wird ein entsprechendes Vielfaches dieser Zeilenfrequenz als Taktfrequenz erzeugt. Die Schaltung ist hierdurch unempfindlich gegenüber Frequenzabweichungen innerhalb eines Systems und auch für Systeme mit unterschiedlichen Zeilenfrequenzen verwendbar.

Im folgenden wird zur Erläuterung des zeitlichen Ablaufs als Beispiel das zweite Teilbild gewählt. Die letzte Zeile jedes zweiten Teilbildes wird nur halb geschrieben und es erscheint nach der halben Zeilendauer der erste Vortrabant (t4 in Fig. 2), der den Beginn der V-Lücke markiert. Durch seine Vorderflanke wird das erste Monoflop 71 erneut gesetzt. Das zweite Monoflop 72 fällt aber erst nach dem Ablauf der halben Zeilendauer und vor dem Ende der ganzen Zeilendauer zurück (t5), so daß es in diesem Fall beim Erscheinen des ersten Vortrabanten noch gesetzt ist und erst danach abfällt, wenn das erste Monoflop 71 bereits wieder gesetzt ist. Dieser Zustand wird durch eine mit den Ausgängen der beiden Monoflops 71 und 72 verbundenen nachfolgenden Zählschaltung 9, die als V-Lücken-Erkennungsschaltung wirksam ist, als Beginn der V-Lücke erkannt.

Die Länge der V-Lücke liegt fest und zwar entspricht sie etwa der Dauer von 7,5 Zeilen (PAL) oder 9 Zeilen (NTSC). Die Zählschaltung 9 wird mit dem Beginn der V-Lücke gestartet und durch die Ausgangsimpuls der Monoflops 72 für die Dauer von 7,5 oder 9 Zeilen weitergeschaltet, nach dieser Zeit setzt er sich wieder in den Ausgangszustand zurück.

Das Ausgangssignal des Taktgenerators 10 wird einem Takteingang (T) der Zählschaltung 8 zugeführt, die durch die Ausgangsimpulse des zweiten Monoflops 72 jeweils zeilensynchron gestartet wird. Vor Ablauf einer Zeilendauer wird die Zählschaltung 8 wieder zurückgestellt, was in bekannter Weise z.B. durch Verknüpfung geeigneter Zählerausgänge erfolgen kann. An zwei Ausgängen 81 und 82 treten Impulse zu verschiedenen Zeiten auf. Jeweils einer dieser beiden Ausgänge wird durch eine Umschalteinrichtung 11 auf den Eingang der Abtast- und Halteschaltung 3 durchgeschaltet. Die Umschalteinrichtung 11 wird von der als V-Lücken-Erkennungsschaltung wirksamen Zählschaltung 9 gesteuert.

Während der Übertragung der Zeilensignale eines Teilbildes ist der Ausgang 81 zur Abtast- und Halteschaltung 3 durchgeschaltet. Jeweils nach dem Starten der Zählschaltung 8 durch einen von einem Synchronimpuls hervorgerufenen Ausgangsimpuls des Monoflops 72 wird an diesem Ausgang nach 12 x T = 6 μs ein Impuls abgegeben (Fig. 3). Beim Auftreten des Synchronimpulses (erste Zeile von Fig. 3) erscheint der Startimpuls für die Zählschaltung 8, dieser ist in Fig. 3 in der zweiten Zeile bei t1 durch einen Pfeil d dargestellt. Der Impuls am Ausgang 81 scheint dann 6 μs später, er fällt in die Zeit, während der der Burst auftritt, so daß zuverlässig auf Austastniveau geklemmt wird.

Wird nach Übertragung z.B. eines zweiten Teilbildes durch die als V-Lücken-Erkennungsschaltung wirksame Zählschaltung 9 der Beginn der V-Lücke erkannt, so wird mittels der Umschalteeinrichtung 11 der Ausgang 82 auf die Abtast- und Halteschaltung 3 durchgeschaltet. An diesem Ausgang 82 erscheint während eines Ausgleichstrabanten (erste Zeile in Fig. 4) ein Impuls jeweils 57 x T = 28,5 μs nach dem zur Zeit t1 erfolgten Start (Pfeil e) der Zählschaltung 8 (Fig. 4).

Durch die Änderung der Verzögerungszeit wird sichergestellt, daß auch während der V-Lücke immer auf Austastniveau geklemmt wird.

Die Verzögerungszeiten werden durch Zählschaltungen bestimmt, so daß sie sehr genau eingestellt werden können. Beim Ausführungsbeispiel läßt sich der Start der Klemmimpulse in Shritten von 0,25 μs Länge festlegen, ihre Breite kann in 0,5 μs-Stufenfrei gewählt werden. Außerdem ist dadurch die zeitliche Länge der Klemmimpulse nicht von Zeitkonstanten von Monoflops abhängig und die Schaltung paßt sich selbsttätig an verschiedene Videosignale an.

Die im Ausführungsbeispiel benutzte Klemmschaltung arbeitet nach dem Kompensationsverfahren. Jedoch läßt sich die beschriebene Anordnung auch für eine getastete Klemmschaltung anwenden.

**Ansprüche**

1. Schaltungsanordnung zur Erzeugung von Klemmimpulsen für eine Klemmschaltung zur Wiedergewinnung der mittleren Bildhelligkeit eines Videosignals, dadurch gekennzeichnet , daß mittels Monoflops (71, 72) aus den Videosignalimpulsen zeilenfrequente Taktimpulse erzeugt werden und mittels einer von den Monoflops (71, 72) angesteuerten ersten Zählschaltung (9) die vertikale Austastlücke erkannt wird und diese erste Zählschaltung (9) jeweils einen der Ausgänge einer zweiten Zählschaltung (8) anwählt, an denen zu unterschiedlichen Zeiten Klemmimpulssignale abgegeben werden.

2. Schaltungsanordnung nach Anspruch 1, dadurch gekennzeichnet , daß zwei Monoflops (71, 72) mit unterschiedlichen Zeitkonstanten vorgesehen sind und ein erstes Monoflop (71) mit der ersten Zählschaltung (9) und ein zweites Monoflop (72) mit einem weiteren Eingang der ersten Zählschaltung (9) sowie mit der zweiten Zählschaltung (8) verbunden ist und daß eine von der ersten Zählschaltung (9) gesteuerte Umschalteinrichtung (11) einerseits mit zwei Ausgängen (81, 82) der zweiten Zählschaltung (8) und andererseits mit der Klemmschaltung (2, 3, 4) verbunden ist.

3. Schaltungsanordnung nach Anspruch 1 oder 2, dadurch gekennzeichnet , daß die Monoflops (71, 72) nicht retriggerbar sind.

4. Schaltungsanordnung nach einem der Ansprüche 1 bis 3, dadurch gekennzeichnet , daß die Zeitkonstante eines ersten Monoflops (71) größer ist als die Dauer eines Synchronimpulses und kleiner als eine halbe Zeilendauer und die Zeitkonstante eines zweiten Monoflops (72) größer ist als die halbe Zeilendauer und kleiner als die ganze Zeilendauer.

5. Schaltungsanordnung nach einem der Ansprüche 1 bis 4, dadurch gekennzeichnet , daß ein Taktgenerator (10) vorgesehen ist, dessen Synchronisiereingang mit dem Ausgang eines Monoflops (72) verbunden ist und dessen Ausgang mit einem Takteingang der zweiten Zählschaltung (8) verbunden ist.

6. Schaltungsanordnung nach Anspruch 5, dadurch gekennzeichnet , daß die Taktfrequenz des Taktgenerators (10) ein ganzzahliges Vielfaches der Synchronimpulsfrequenz ist.

**Claims**

1. A circuit arrangement for generating clamping pulses for a clamping circuit for the regeneration of the average picture luminance of a video signal, characterized in that line-frequency clock pulses are produced from the video signal pulses with the aid of monostable multivibrators (71, 72) and that the vertical blanking interval is detected by means of a first counting circuit (9) which is driven by one of the monostable multivibrators (71, 72), said first counting circuit (9) always selecting one of the outputs of a second counting circuit (8), from which outputs clamping pulse signals are supplied at different instants.

2. A circuit arrangement as claimed in Claim 1, characterized in that two monostable multivibrators (71, 72) having different time constants are provided and that a first monostable multivibrator (71) is connected to the first counting circuit (9) and a second monostable multivibrator (72) is connected to a further input of the first counting circuit (9) and also to the second counting circuit (8), and that a change-over device (11) which is controlled by the first counting circuit (9) has one side connected to two outputs (81, 82) of the second counting circuit (8) and its other side connected to the clamping circuit (2, 3, 4).

3. A circuit arrangement as claimed in Claim 1 or 2, characterized in that the monostable multivibrators (71, 72) are not retriggerable.

4. A circuit arrangement as claimed in any one of Claims 1 to 3, characterized in that the time constant of a first monostable multivibrator (71) exceeds the duration of a synchronizing pulse and is less than half a line period, and the time constant of a second monostable multivibrator (72) exceeds half the line period and is less than the whole line period.

5. A circuit arrangement as claimed in any of Claims 1 to 4, characterized in that a clock generator (10) is provided whose synchronizing input is connected to the output of one monostable multivibrator (72) and whose output is connected to a clock input of the second counting circuit (8).

6. A circuit arrangement as claimed in Claim 5, characterized in that the clock frequency of the clock generator (10) is an integral multiple of the synchronizing pulse frequency.

**Revendications**

1. Montage de circuit destiné à produire des impulsions de verrouillage pour un circuit de verrouillage en vue de la récupération de la luminance moyenne d'un signal vidéo, caractérisé en ce que des impulsions d'horloge à la fréquence de lignes sont produites à partir des impulsions de signal vidéo à l'aide de bascules monostables (71, 72) et l'intervalle de suppression verticale est identifié à l'aide d'un premier circuit de comptage (9) commandé par une des bascules monostables (71, 72), ce premier circuit de comptage (9) sélectionnant chaque fois une des sorties d'un second circuit de comptage (8) auxquelles des signaux d'impulsions de verrouillage sont fournis à des moments différents.

2. Montage de circuit suivant la revendication 1, caractérisé en ce qu'il comporte deux bascules monostables (71, 72) à constantes de temps différentes, une première bascule monostable (71) étant connectée au premier circuit de comptage (9) et une seconde bascule monostable (72) étant connectée à une autre entrée du premier circuit de comptage (9) ainsi qu'au second circuit de comptage (8), et qu'un dispositif de commutation (11) commandé par le premier circuit de comptage (9) est connecté, d'une part, à deux sorties (81, 82) du second circuit de comptage (8) et, d'autre part, au circuit de verrouillage (2, 3, 4).

3. Montage de circuit suivant la revendication 1 ou 2, caractérisé en ce que les bascules monostables (71, 72) ne sont pas redéclenchables.

4. Montage de circuit suivant l'une quelconque des revendications 1 à 3, caractérisé en ce que la constante de temps d'une première bascule monostable (71) est supérieure à la durée d'une impulsion de synchronisation et inférieure à la moitié d'une période de ligne, tandis que la constante de temps d'une seconde bascule monostable (72) est supérieure à la moitié de la période de ligne et inférieure à la période de ligne complète.

5. Montage de circuit suivant l'une quelconque des revendications 1 à 4, caractérisé en ce qu'il comporte un générateur d'impulsions d'horloge (10) dont l'entrée de synchronisation est connectée à la sortie d'une bascule monostable (72) et dont la sortie est connectée à une entrée d'horloge du second circuit de comptage (8).

6. Montage de circuit suivant la revendication 5, caractérisé en ce que la fréquence d'horloge du générateur d'impulsions d'horloge (10) est un multiple entier de la fréquence d'impulsions de synchronisation.

FIG.1

FIG.2

FIG.3

FIG.4